# FASCICULE DE BREVET EUROPEEN

(11) **EP 1 063 156 B1**
(45) Date de publication et mention de la délivrance du brevet: **26.01.2005**
(21) Numéro de dépôt: 00401322.3
(22) Date de dépôt: 15.05.2000
(51) Int. Cl.: B62J 9/00

(54) **Dispositif de fixation pour bagage de selle de motocyclette ou véhicule analogue**
Befestigungsvorrichtung für Gepäck auf einem Sattel eines Motorrades oder ähnlichem Fahrzeug
Attachment device for luggage on the seat of a motorcycle or similar vehicle

(30) Priorité: 22.06.1999 FR 9907953
(43) Date de publication de la demande: 27.12.2000
(73) Titulaire: Bagster SA, 61600 La Ferte Mace (FR)
(72) Inventeur: Briant, Jean-Marc, 61600 Beauvain (FR); Courtois, Gilles, 61600 La Sauvagere (FR)
(74) Mandataire: Plaçais, Jean-Yves

(56) Documents cités:
- EP-A- 0 508 105
- DE-A- 4 230 360
- DE-U- 29 706 896
- US-A- 5 518 291

## Description

La présente invention se rapporte à un procédé de fixation d'un bagage de selle de motocyclette ou véhicule analogue, dans lequel la selle est susceptible d'être fixée sur le châssis de la motocyclette dans une position de transport et susceptible d'être, au moins partiellement, démontée du châssis dans une position de démontage tel que défini dans la revendication 1.

Elle trouve une application pour la fixation d'un bagage, sacoche, caisse métallique, conteneur, paquet ou autre accessoire analogue sur une selle, porte paquet ou analogue, d'un véhicule de type motocyclette ou véhicule analogue (notamment tout véhicule avec selle passager).

On connaît déjà des dispositifs de fixation pour bagage de selle de motocyclette. Généralement, le bagage se fixe à l'arrière de la selle ou sur un porte paquet, par l'intermédiaire d'organes de liaison séparables. Le plus souvent, ces organes de liaison séparables comprennent des sangles solidaires du bagage et passant sous la selle lorsque celle-ci est en position de démontage.

De tels dispositifs de fixation ne sont pas totalement satisfaisants dans la mesure où les sangles sont apparentes, ce qui nuit à l'esthétique de la motocyclette. De plus, ce genre de fixation n'est pas totalement stable.

La présente invention remédie à ces inconvénients.

Elle porte sur un procédé de fixation pour bagage de selle de motocyclette ou véhicule analogue au moyen d'un dispositif de fixation. Un tel procédé est décrit dans le document EP-A-0 508 105.

La présente invention porte également sur une motocyclette ou véhicule analogue selon la revendication 12.

Grâce au dispositif de fixation de l'invention, les première et seconde bandes de fixation sont dissimulées sous la selle, lorsqu'elle est en position de transport, ainsi l'esthétique de la motocyclette est préservée.

Selon une caractéristique importante de l'invention, le dispositif de fixation comprend en outre au moins une première bande de jonction comprenant un premier côté libre équipé d'un organe de liaison séparable apte à coopérer avec l'organe de liaison séparable de la première bande de fixation et un second côté libre équipé d'un organe de liaison séparable apte à coopérer avec le premier organe de liaison du bagage.

De préférence, le dispositif de fixation comprend en outre une seconde bande de jonction comprenant un premier côté libre équipé d'un organe de liaison séparable apte à coopérer avec l'organe de liaison séparable de la seconde bande de fixation et un second côté libre équipé d'un organe de liaison séparable apte à coopérer avec le second organe de liaison du bagage.

En pratique, la première bande de jonction est de forme conjuguée, au moins partiellement, avec celle de la première bande de fixation.

De même, la seconde bande de jonction est de forme conjuguée, au moins partiellement, avec celle de la seconde bande de fixation.

Très avantageusement, les première et seconde bandes de jonction sont de largeur choisie en fonction de l'épaisseur de la selle.

Ainsi, grâce au dispositif de fixation selon l'invention, il est possible de choisir des bandes de jonction de largeur spécifique à un modèle de motocyclette choisi.

En pratique, les premier et second moyens de fixation sont du type sangle, vis/écrou ou une combinaison de sangle et de vis/ écrou ou analogue, en fonction du type de motocyclette.

Ainsi, grâce au dispositif de fixation selon l'invention, la fixation des bandes de fixation est spécifique à chaque modèle de motocyclette, il en résulte une conception de type sur mesure du dispositif de fixation selon l'invention. En revanche, la fabrication du bagage (ou tout autre accessoire pouvant être transporté (bidon, valise, caisse, paquet,...)) peut être totalement libre et standard.

De manière générale, la selle est de forme générale parallélépipédique, et les première et seconde bandes de fixation sont de forme spécifique adaptée à chaque véhicule, avec les grands côtés des bandes de fixation faisant saillie par rapport à la selle montée en position de transport.

De même, le bagage est généralement de forme générale parallélépipédique et les première et seconde bandes de jonction sont de forme générale trapézoïdale ou rectangulaire, avec les grands côtés des bandes de jonction disposés parallèlement par rapport aux bords longitudinaux du bagage.

De préférence, les première et seconde bandes de fixation ainsi que les première et seconde bande de jonction sont réalisées en un matériau souple, de type cuir, matière plastique, polyester, nylon, tissu ou analogue.

Très avantageusement, les organes de liaison séparables des première et seconde bandes de fixation ainsi que du bagage, sont de type fermetures à glissière, clips, bandes Velcro ou analogue.

De même, les organes de liaison séparables des première et seconde bandes de jonction sont de type fermetures à glissière, clips, bandes Velcro ou analogue.

Dans le mode de réalisation à fermeture à glissières, la première et/ou seconde bandes de jonction comprennent chacune un élément apte à recevoir l'extrémité libre du curseur de la fermeture à glissière lorsqu'elle est en position fermée, afin de bloquer ladite extrémité libre de curseur.

D'autres caractéristiques et avantages de l'invention apparaîtront à la lumière de la description détaillée ci-après et des dessins dans lesquels :
- les figures 1A et 1B représentent schématiquement, en vue de dessus, la fixation des bandes de fixation sur le châssis de la motocyclette par des vis;
- les figures 2A et 2B représentent, en vue de dessus, la fixation des bandes de fixation sur le châssis de la motocyclette par des sangles;
- les figures 3A et 3B représentent, en vue de dessus, la fixation des bandes de fixation sur le châssis de la motocyclette par des vis et des sangles;
- la figure 4 est une vue de dessus du dispositif de fixation avec les bandes de fixation fixées sur le châssis de la motocyclette, et la selle en position de transport;
- la figure 5 est une vue de côté du dispositif de la figure 4, selon l'invention.
- la figure 6 est une vue de côté de l'ensemble du dispositif de fixation de l'invention avec bandes de fixation, bandes de jonction et bagage;
- la figure 7 représente schématiquement un ensemble formé par une bande de fixation, une bande de jonction et un bagage; et
- la figure 8 est une vue de côté illustrant la fixation du bagage dans laquelle la bande de jonction est apparente, la bande de fixation étant dissimulée sous la selle.

Les dessins comportant des éléments de caractères certains. A ce titre, ils peuvent servir à mieux faire comprendre la description de l'invention, et contribuer, le cas échéant, à la définition de celle-ci.

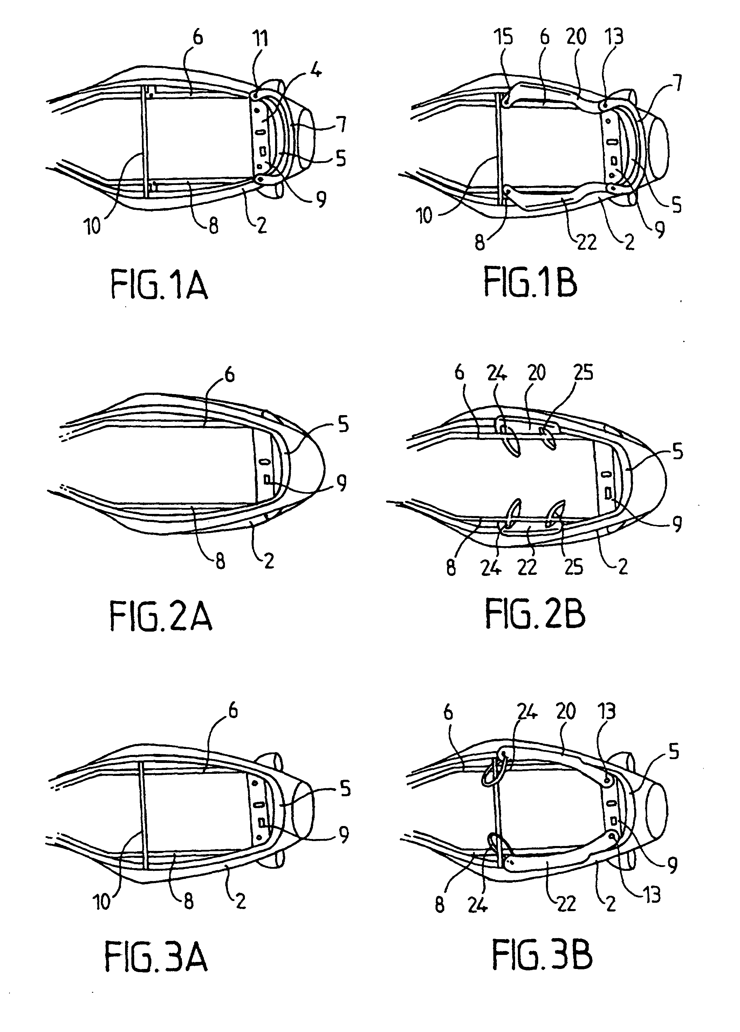

En référence aux figures 1A à 3B, une motocyclette comprend généralement un châssis arrière 2 sur lequel est destinée à être fixée une selle pour passager. Le châssis peut varier en fonction du modèle de la motocyclette.

En référence à la figure 1A, le châssis arrière 2 comprend un cadre 4 comprenant deux tiges longitudinales 6 et 8 et deux tiges transversales 5 et 10. Une poignée 7 est fixée à l'arrière sur la tige transversale 5 à l'aide d'une plaque de fixation 9 et des vis 11.

Le châssis arrière de la motocyclette représenté en figure 1A est, par exemple, celui d'une motocyclette de type 650 SV (SUZUKI); YZF 750 (YAMAHA); 600 DIVERSION (YAMAHA) ou CBR 1000 (HONDA).

En référence à la figure 2A, le châssis arrière 2 comprend les éléments 5, 6 et 8 de la figure 1A. La tige 10 ainsi que la poignée 7 sont supprimées.

Le châssis de la figure 2A est, par exemple, celui de la motocyclette de type 900 SS (DUCATI) ou CBR 900 (HONDA).

En référence à la figure 3A, le châssis arrière 2 comprend les éléments 5, 6, 8, 9 et 10 de la figure 1A. Il est dépourvu en revanche de la tubulure 7, formant poignée.

Le modèle de la motocyclette représenté en figure 3A est, par exemple, celui de la motocyclette ZR7 (KAWASAKI) ou 600/1200 BANDIT (SUZUKI).

Il apparaît, en référence aux figures 1A, 2A et 3A que le châssis arrière d'une motocyclette est de configuration différente. En corollaire, les moyens de fixation du dispositif de l'invention vont présenter des variantes de réalisation, adaptées aux différents modèles de châssis arrière de motocyclette.

Par exemple, en référence à la figure 1B, des moyens de fixation de type vis-écrou sont susceptibles d'être utilisés sur les tiges 6 et 8 pour fixer les bandes de fixation 20 et 22 que l'on décrira plus en détail ci-après.

En référence à la figure 2B, les moyens de fixation des bandes de fixation 20 et 22 comprennent des systèmes 24 et 25 à sangle disposés autour des tubulures 6 et 8 du cadre de la figure 2B.

En référence à la figure 3B, une combinaison de sangles 24 et de systèmes vis/écrou 13 est utilisée pour fixer les bandes de fixation selon l'invention.

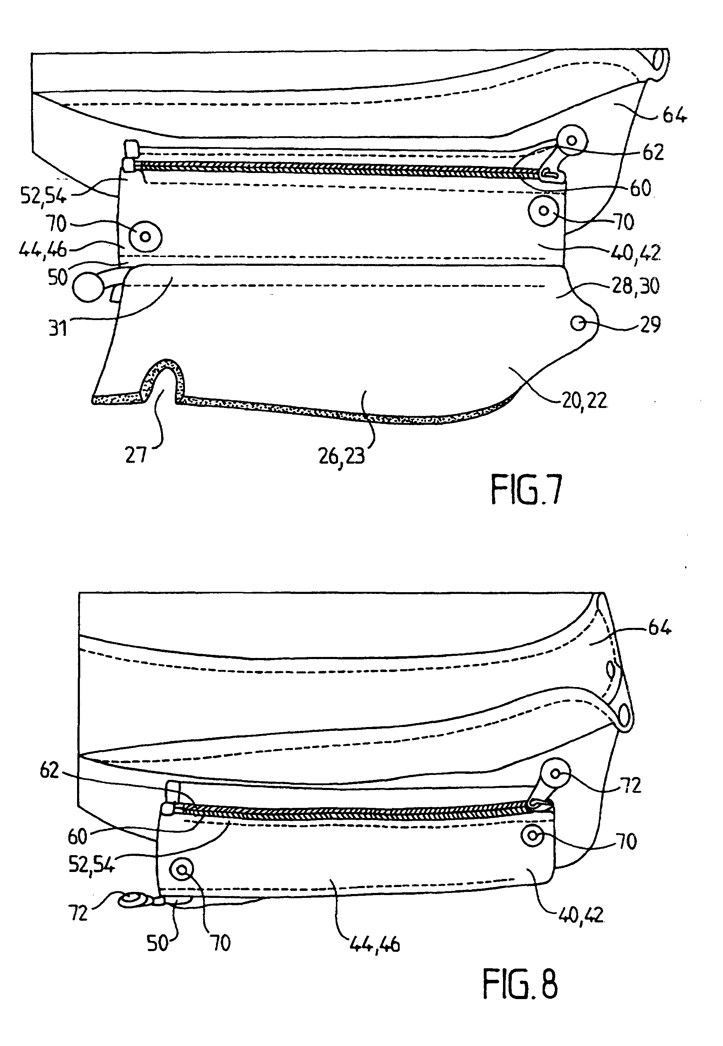

En référence aux figures 7 et 8, on a représenté un dispositif de fixation pour un châssis du type de celui décrit en référence à la figure 3B. Le dispositif de fixation comprend des bandes de fixation 20 et 22, comprenant chacune un premier côté 26/23 destiné à être fixé par des moyens de fixation 24, 13 sur une première partie du châssis 2 lorsque la selle est dans la position de démontage.

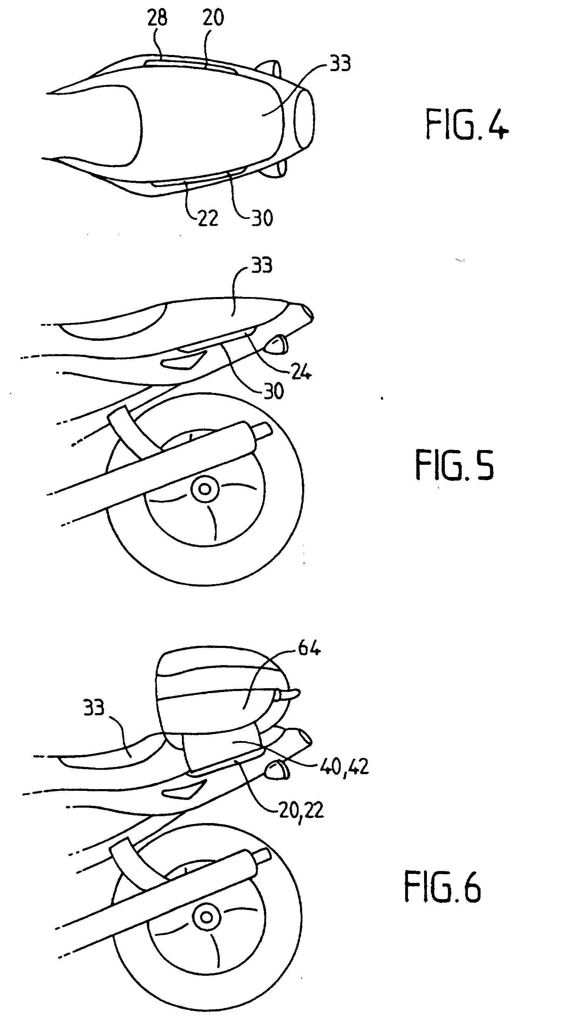

En référence aux figures 4 et 5, chaque bande de fixation 20, 22 comprend un second côté 28, 30 destiné à faire saillie par rapport à la selle 33 lorsque celle-ci est en position de transport.

En référence à la figure 7, le second côté 28, 30 de la bande de fixation 20, 22 est équipé d'un organe de liaison séparable 31, de type fermeture à glissière.

Chaque bande de fixation 20 et 22 comprend des aménagements 27 et 29 pour recevoir respectivement les moyens de fixation associés (sangle 24 et vis 13).

En référence aux figures 7 et 8, le dispositif de fixation comprend en outre des première et seconde bandes de jonction 40, 42 comprenant chacune un premier côté libre 44, 46 équipé d'un organe de liaison séparable 50 apte à coopérer avec l'organe de liaison séparable 31 de la bande de fixation associée. Chaque bande de jonction 40, 42 comprend un second côté libre 52, 54 équipé d'un organe de liaison séparable 60 apte à coopérer avec un organe de liaison 62 du bagage 64.

De façon avantageuse, chaque bande de jonction 40, 42 est de forme conjuguée, au moins partiellement, avec celle de la bande de fixation 20, 22 associée.

Dans certaines configurations de motocyclette et de selle, les bandes de jonction 40, 42 peuvent être inutiles. Dans ces conditions, le bagage 64 est solidaire du châssis de la motocyclette par les organes de liaison séparables des bandes de fixation 20 et 22 et des organes de liaison séparables du bagage.

Dans la plupart des cas, la selle présente une certaine épaisseur et dans ces conditions, les bandes de jonction 40 et 42 sont utiles. Les bandes de jonction 40 et 42 sont de largeur choisie en fonction de l'épaisseur de la selle qui varie en fonction du modèle de la motocyclette.

En règle générale, la selle est de forme générale parallélépipédique et les bandes de fixation 20 et 22 sont de forme spécifique adaptée à chaque véhicule avec les grands côtés faisant saillie par rapport à la selle montée en position de transport.

En pratique, les bandes de fixation ainsi que les bandes de jonction sont réalisées en matériau souple. Le matériau peut être du type cuir, matière plastique, polyester, nylon, tissu ou analogue.

Les organes de liaison séparables des bandes de fixation 20, 22, du bagage 64 et des bandes de jonction 40, 42 sont de type fermetures à glissière, clips, bandes Velcro ou analogue.

En référence à la figure 7, les bandes de jonction comprennent chacune un élément 70 (de type bouton-pression) apte à recevoir l'extrémité libre 72 du curseur de la fermeture à glissière lorsqu'elle est en position fermée, afin de bloquer ladite extrémité libre du curseur.

Le montage du dispositif de fixation selon l'invention est le suivant.
1) - fixer les bandes de fixation 20 et 22 sous le siège (ou selle) passager 33 en ne laissant passer de l'assise de ce siège que les bords libres 28 et 30;
2) - solidariser les bandes de jonction 40 et 42 avec un bagage 64 par fermeture à glissière ou analogue;
3) - solidariser l'ensemble formé par le bagage 64 et les bandes de jonction 40, 42 avec les bandes de fixation 20 et 22, également par fermeture à glissière ou analogue.

Il est à remarquer que les bandes de fixation 20 et 22 peuvent être spécifiques à chaque modèle de motocyclette. De même, les bandes de jonction 40 et 42 peuvent être également spécifiques à chaque modèle. En revanche, le bagage peut être libre et standard à tous les modèles de motocyclette.

Il est également à remarquer que la selle en position de transport dissimule les bandes de fixation 20 et 22 en ne laissant apparaître que les fermetures à glissière. Les bandes de fixation restent à demeure sur la motocyclette et ne dégradent pas l'esthétique de celle-ci. Il est à remarquer que les bandes de fixation 20 et 22 peuvent être également escamotées sous la selle, en cas de non utilisation prolongée du bagage. Par ailleurs, le bagage peut être porté en sac à dos par un éventuel passager.

Le bagage peut être équipé de poches permettant de recevoir les bandes de jonction 40 et 42 lorsque le bagage est désolidarisé de la motocyclette.

## Revendications

1. Procédé de fixation d'un bagage sur une selle de motocyclette ou de véhicule analogue, la selle (33) étant susceptible d'être fixée sur le châssis (2) du véhicule dans une position de transport et d'être, au moins partiellement, démontée du châssis (2) dans une position de démontage, au moyen d'un dispositif de fixation comprenant :
- une première bande de fixation (20) comprenant un premier côté (26) qui se fixe par des premiers moyens de fixation sur une première partie du châssis (2) et un second côté (28) équipé d'un organe de liaison séparable (31),
- une seconde bande de fixation (22) comprenant un premier côté (23) qui se fixe par des seconds moyens de fixation sur une seconde partie du châssis (2), opposée à la première partie par rapport à la selle (33), et un second côté (30) équipé d'un organe de liaison séparable (31),
le bagage (64) étant équipé de premier et second organes de liaison séparables (62) aptes à coopérer respectivement avec les organes de liaison séparable (60) des première et seconde bandes de fixation (20, 22), **caractérisé en ce qu'**on fixe le premier côté (23) de chaque bande de fixation (20, 22) lorsque la selle (33) est dans la position de démontage, les bandes de fixation étant dissimulées sous la selle (33), et seuls lesdits seconds côtés (28, 30) faisant saillie par rapport à celle-ci, lorsqu'elle est en position de transport.

2. Procédé selon la revendication 1, **caractérisé en ce que** le dispositif de fixation comprend en outre au moins une première bande de jonction (40) comprenant un premier côté libre (44) équipé d'un organe de liaison séparable (50) apte à coopérer avec l'organe de liaison séparable (31) de la première bande de fixation (20) et un second côté libre (52) équipé d'un organe de liaison séparable (60) apte à coopérer avec le premier organe de liaison (62) du bagage (64), et/ou au moins une seconde bande de jonction (42) comprenant un premier côté libre (46) équipé d'un organe de liaison séparable (50) apte à coopérer avec l'organe de liaison séparable (31) de la seconde bande de fixation (22) et un second côté libre (54) équipé d'un organe de liaison séparable (60) apte à coopérer avec le second organe de liaison (62) du bagage (64).

3. Procédé selon la revendication 2, **caractérisé en ce que** les première et/ou seconde bandes de jonction (40, 42) sont de forme conjuguée au moins partiellement avec celle de la première bande de fixation (20) et/ou de la seconde bande de fixation (22) respectivement.

4. Procédé selon l'une des revendications 2 et 3, **caractérisé en ce que** les première et/ou seconde bandes de jonction (40, 42) sont de largeur choisie en fonction de l'épaisseur de la selle.

5. Procédé selon l'une des revendications 2 à 4, **caractérisé en ce que** les organes de liaison séparable (50, 60) des première et/ou seconde bandes de jonction (40, 42) sont de type fermetures à glissières, clips, bandes Velcro ou analogue.

6. Procédé selon la revendication 5, **caractérisé en ce que** les première et/ou seconde bandes de jonction (40, 42) comprennent chacun un élément (70) apte à recevoir l'extrémité libre (72) du curseur de la fermeture à glissière lorsqu'elle est en position fermée afin de bloquer ladite extrémité libre du curseur.

7. Procédé selon l'une des revendications 2 à 6, **caractérisé en ce que** le bagage (64) est de forme générale parallélépipédique et que les première et/ou seconde bandes de jonction (40, 42) sont de forme générale rectangulaire ou trapézoïdale.

8. Procédé selon l'une des revendications précédentes, **caractérisé en ce que** les premier et second moyens de fixation sont du type sangle, vis/écrou, ou une combinaison de sangle et de vis/écrou ou analogue, en fonction du type de véhicule.

9. procédé selon l'une des revendications précédentes; **caractérisé en ce que** la selle (33) est de forme générale parallélépipédique et que les première et seconde bandes de fixation (20, 22) sont de forme générale trapézoïdale ou rectangulaire, avec les grands côtés (28, 30) faisant saillie par rapport à la selle (33) montée en position de transport.

10. Procédé selon l'une des revendications précédentes, **caractérisé en ce que** les première et seconde bandes de fixation (20, 22) et le cas échéant les première et/ou seconde bandes de jonction (40, 42) sont réalisées en un matériau souple du type cuir, matière plastique, polyester, nylon, tissu ou analogue.

11. Procédé selon l'une des revendications précédentes, **caractérisé en ce que** les organes de liaison séparable (31, 62) des première et seconde bandes de fixation (20, 22) ainsi que ceux du bagage (64) sont de type fermetures à glissières, clips, bandes Velcro ou analogue.

12. Motocyclette ou véhicule analogue comprenant un châssis (2) et une selle (33) susceptible d'être fixée sur le châssis dans une position de transport et d'être, au moins partiellement, démontée du châssis dans une position de démontage, **caractérisé en ce que** des première et seconde bandes de fixation (20, 22) telles que définies dans l'une des revendications précédentes sont fixées par des moyens de fixation respectifs sur des parties respectives du châssis (2) de manière à être dissimulées sous la selle (33), seuls lesdits seconds côtés (28, 30) faisant saillie par rapport à celle-ci, lorsqu'elle est en position de transport.

## Claims

1. Method of attaching luggage onto a seat of a motorcycle or similar vehicle, the seat (33) being capable of being secured onto the chassis (2) of the vehicle in a transport position and of being at least partially demounted from the chassis (2) in a demounted position, by means of an attachment device comprising :
- a first attachment band (20) comprising a first side (26) which is secured by first attachment means onto a first part of the chassis (2) and a second side (28) fitted with a separable connecting member (31),
- a second attachment band (22) comprising a first side (23) which is secured by second attachment means onto a second part of the chassis (2) opposite the first part in relation to the seat (33) and a second side (30) fitted with a separable connecting member (31),
the luggage (64) being fitted with first and second separable connecting members (62) suitable for co-operating respectively with the separable connecting members (6) of the first and second attachment bands (20, 22), **characterised in that** the first side (23) of each attachment band (20, 22) is secured when the seat (33) is in the demounted position, the attachment bands being concealed under the seat (33) and only the said second sides (28, 30) projecting relative to the latter when it is in the transport position.

2. Method according to claim 1, **characterised in that** the attachment device also comprises at least one first connecting band (40) comprising a first free side (44) fitted with a separable connecting member (50) suitable for co-operating with the separable connecting member (31) of the first fixing band (20) and a second free side (52) fitted with a separable connecting member (60) suitable for co-operating with the first connecting member (62) of the luggage (64), and/or at least one second connecting band (42) comprising a first free side (46) fitted with a separable connecting member (50) suitable for co-operating with the separable connecting member (31) of the second fixing band (22) and a second free side (54) fitted with a separable connecting member (60) suitable for co-operating with the second connecting member (62) of the luggage (64).

3. Method according to claim 2, **characterised in that** the first and/or second connecting bands (40, 42) are of conjugated form at least partially with that of the first attachment band (20) and/or the second attachment band (22) respectively.

4. Method according to one of claims 2 and 3, **characterised in that** the first and/or second connecting bands (40, 42) are of width chosen according to the thickness of the seat.

5. Method according to one of claims 2 to 4, **characterised in that** the separable connecting members (50, 60) of the first and/or second connecting bands (40, 42) are those such as zip fasteners, clips, Velcro strips or similar.

6. Method according to claim 5, **characterised in that** the first and/or second connecting bands (40, 42) each comprise an element (70) suitable for receiving the free end (72) of the slider of the zip fastener when it is in a closed position so as to stop the said free end of the slider.

7. Method according to one of claims 2 to 6, **characterised in that** the luggage (64) is of generally parallelepipedic form and that the first and/or second connecting bands (40, 42) are of generally rectangular or trapezoidal form.

8. Method according to one of the preceding claims, **characterised in that** the first and second fixing means are of the strap type, screw/nut type or a combination of strap and screw/nut or similar according to the type of vehicle.

9. Method according to one of the preceding claims, **characterised in that** the seat (33) is of generally parallelepipedic form and that the first and second attachment bands (20, 22) are of generally trapezoidal or rectangular form, with the long sides (29, 30) projecting relative to the seat (33) mounted in the transport position.

10. Method according to one of the preceding claims, **characterised in that** the first and second attachment bands (20, 22) and, where applicable, the first and/or second connecting bands (40, 42) are made from a flexible material such as leather, plastics material, polyester, nylon, fabric or similar.

11. Method according to one of the preceding claims, **characterised in that** the separable connecting members (31, 62) of the first and second attachment bands (20, 22) as well as those of the luggage (64) are of the type such as zip fasteners, clips, Velcro strips or similar.

12. Motorcycle or similar vehicle comprising a chassis (2) and a seat (33) capable of being secured onto the chassis in a transport position and of being at least partially demounted from the chassis in a demounted position, **characterised in that** first and second attachment bands (20, 22) as defined in one of the preceding claims are attached by respective attachment means onto the respective parts of the chassis (2) in such a way as to be concealed under the seat (33), only the said second sides (28, 30) projecting relative to the latter, when it is in the transport position.

## Patentansprüche

1. Verfahren zur Befestigung eines Gepäckaufsatzes auf einer Sitzbank eines Motorrads oder gleichwertigen Fahrzeugs, wobei die Sitzbank (33) geeignet ist, auf dem Fahrgestell (2) des Fahrzeugs in einem Transportzustand befestigt zu sein und zumindest teilweise vom Fahrgestell (2) in einem abgebauten Zustand abmontiert zu sein, mittels einer Befestigungsvorrichtung, die aufweist:
- eine erste Befestigungsleiste (20), die eine erste Seite (26), die sich durch erste Befestigungsmittel auf einem ersten Abschnitt des Fahrgestells (2) befestigen lässt, und eine zweite Seite (28) aufweist, die mit einem abtrennbaren Verbindungselement (31) ausgestattet ist,
- eine zweite Befestigungsleiste (22), die eine erste Seite (23), die sich durch zweite Verbindungsmittel auf einem zweiten Abschnitt des Fahrgestells (2) befestigen lässt, der dem ersten Abschnitt bezüglich der Sitzbank (33) gegenüberliegt, und eine zweite Seite (30) aufweist, die mit einem abtrennbaren Verbindungselement (31) ausgestattet ist,
wobei der Gepäckaufsatz (64) mit ersten und zweiten abtrennbaren Verbindungsmitteln (62) ausgestattet ist, die geeignet sind, entsprechend mit den abtrennbaren Verbindungselementen (60) der ersten und zweiten Befestigungsleisten (20, 22) zusammenzuwirken,
**dadurch gekennzeichnet, dass**
man die erste Seite (23) jeder Befestigungsleiste (20, 22) befestigt, wenn die Sitzbank (33) im abgebauten Zustand ist, wobei die Befestigungsbänder unter der Sitzbank (33) verborgen sind, und lediglich die zweiten Seiten (28, 30) bezüglich der Sitzbank hervorstehen, wenn sie im Beförderungszustand ist.

2. Verfahren nach Anspruch 1, **dadurch gekennzeichnet, dass** die Befestigungsvorrichtung darüber hinaus mindestens eine erste Verbindungsleiste (40), die eine erste freie Seite (44), -die mit einem abtrennbaren Verbindungselement (50) ausgestattet ist, das geeignet ist, mit dem abtrennbaren Verbindungselement (31) der ersten Befestigungsleiste (20) zusammenzuwirken, und eine zweite freie Seite (52) aufweist, die mit einem abtrennbaren Verbindungselement (60) ausgestattet ist, das geeignet ist, mit dem ersten Verbindungselement (62) des Gepäckaufsatzes (64) zusammenzuwirken, und/oder mindestens eine zweite Verbindungsleiste (42) aufweist, die eine erste freie Seite (46), die mit einem abtrennbaren Verbindungselement (50) ausgestattet ist, das geeignet ist, mit dem abtrennbaren Verbindungselement (31) der zweiten Befestigungsleiste (22) zusammenzuwirken, und eine zweite freie Seite (44) aufweist, die mit einem abtrennbaren Verbindungselement (60) ausgestattet ist, das geeignet ist, mit dem zweiten Verbindungselement (62) des Gepäckaufsatzes (64) zusammenzuwirken.

3. Verfahren nach Anspruch 2, **dadurch gekennzeichnet, dass** die ersten und/oder zweiten Verbindungsleisten (40, 42) derart gebildet sind, dass sie mindestens teilweise mit der Form der ersten Befestigungsleiste (20) und/oder zweiten Befestigungsleiste (22) gekoppelt sind.

4. Verfahren nach einem der Ansprüche 2 und 3, **dadurch gekennzeichnet, dass** die ersten und/oder zweiten Verbindungsleisten (40, 42) von vorbestimmter ßreite in Abhängigkeit der Dicke der Sitzbank sind.

5. Verfahren nach einem der Ansprüche 2 bis 4, **dadurch gekennzeichnet, dass** die abtrennbaren Verbindungselemente (50, 60) der ersten und/oder zweiten Verbindungsleisten (40, 42) vom Typ Reißverschluss, Klammer, Klettverschluss oder dergleichen sind.

6. Verfahren nach Anspruch 5, **dadurch gekennzeichnet, dass** die ersten und/oder zweiten Verbindungsleisten (40, 42) jede ein Element (70) aufweisen, das geeignet ist, das freie Ende (72) des Reißverschlussschiebers aufzunehmen, wenn er in geschlossenem Zustand ist, um das freie Ende des Schiebers festzuklemmen.

7. Verfahren nach einem der Ansprüche 2 bis 6, **dadurch gekennzeichnet, dass** der Gepäckaufsatz (64) von allgemeiner Quaderform ist und dass die ersten und/oder zweiten Verbindungsleisten (40, 42) von allgemeiner rechteckiger oder trapezähnlicher Form sind.

8. Verfahren nach einem der vorhergehenden Ansprüche, **dadurch gekennzeichnet, dass** die ersten und zweiten Befestigungsmittel vom Typ Gurt, Schraube/Mutter oder einer Kombination von Gurt und Schraube/Mutter oder gleichwertig sind, entsprechend der Art des Fahrzeugs.

9. Verfahren nach einem der vorhergehenden Ansprüche, **dadurch gekennzeichnet, dass** die Sitzbank (33) von allgemeiner quaderähnlicher Form ist und dass die ersten und zweiten Befestigungsleisten (20, 22) von allgemeiner trapezähnlicher oder rechteckiger Form sind, wobei die Längsseiten (28, 30) bezüglich der in Transportzustand angebrachten Sitzbank (33) hervorstehen.

10. Verfahren nach einem der vorhergehenden Ansprüche, **dadurch gekennzeichnet, dass** die ersten und zweiten Befestigungsleisten (20, 22) und gegebenenfalls die ersten und/oder zweiten Verbindungsleisten (40, 42) in einem nachgiebigen Material vom Typ Leder, Kunststoff, Polyester, Nylon, Stoff oder gleichwertigem ausgeführt sind.

11. Verfahren nach einem der vorhergehenden Ansprüche, **dadurch gekennzeichnet, dass** die abtrennbaren Verbindungselemente (31, 62) der ersten und zweiten Befestigungsleisten (20, 22) sowie jene des Gepäckaufsatzes (64) vom Typ Reißverschluss, Klammer, Klettverschluss oder gleichwertigem sind.

12. Motorrad oder gleichwertiges Fahrzeug, das ein Fahrgestell (2) und eine Sitzbank (33) aufweist, die dazu geeignet ist, auf dem Fahrgestell in einem Beförderungszustand befestigt zu sein und zumindest teilweise vom Fahrgestell in einem abgebauten Zustand abmontiert zu sein, **dadurch gekennzeichnet, dass** erste und zweite Befestigungsleisten (20, 22), wie sie in einem der vorhergehenden Ansprüche definiert sind, mit entsprechenden Befestigungsmitteln auf den entsprechenden Abschnitten des Fahrgestells (2) derart befestigt sind, dass sie unter der Sitzbank (33) verborgen sind, wobei lediglich die zweiten Seiten (28, 30) bezüglich der Sitzbank hervorstehen, wenn sie im Beförderungszustand ist.
